# EUROPÄISCHE PATENTSCHRIFT

(11) **EP 4 324 072 B1**
(45) Veröffentlichungstag und Bekanntmachung des Hinweises auf die Patenterteilung: **27.05.2026**
(21) Anmeldenummer: 21718863.0
(22) Anmeldetag: 14.04.2021
(51) Int. Cl.: H02K 1/14, H02K 1/02, H02K 1/18, H02K 9/19, H02K 1/20, H02K 3/34

(54) **STATOR FÜR EINE ROTIERENDE ELEKTRISCHE MASCHINE**
STATOR FOR A ROTATING ELECTRICAL MACHINE
STATOR POUR MACHINE ÉLECTRIQUE TOURNANTE

(43) Veröffentlichungstag der Anmeldung: 21.02.2024
(73) Patentinhaber: Hyperdrives GmbH, 81379 München (DE)
(72) Erfinder: NUMBERGER, Michael, 80469 München (DE)
(74) Vertreter: Hoffmann Eitle
(86) Internationale Anmeldenummer: PCT/EP2021/059656
(87) Internationale Veröffentlichungsnummer: WO 2022/218520

(56) Entgegenhaltungen:
- WO-A1-2019/233739
- DE-A1- 102019 003 258
- DE-T5- 112018 002 325
- JP-A- 2005 080 474
- JP-A- H10 271 716
- US-A1- 2008 061 653
- US-A1- 2018 351 417

## Beschreibung

### Gebiet der Erfindung

Die Erfindung betrifft einen Stator für eine rotierende elektrische Maschine mit verteilter Wicklung in der Bauweise als Radialflussmaschine mit Innenläufer und eine elektrische Maschine mit einem solchen Stator. Ferner betrifft die Erfindung ein Verfahren zur Montage eines Stators.

### Hintergrund der Erfindung

Elektrische Maschinen nutzen die Eigenschaften der elektromagnetischen Wechselwirkung und der hervorgerufenen magnetischen Kraftwirkungen zwischen Stator und Rotor. Elektrische Maschinen können motorisch oder generatorisch betrieben werden.

Es gibt diverse Topologien von rotierenden elektrischen Maschinen mit einem (oder mehreren) Stator(en) und einem (oder mehreren) relativ dazu beweglich gelagerten Rotor(en).

Im Allgemeinen werden diese elektrischen Maschinen gemäß der Ebene benannt, in der sich die magnetischen Flusslinien ausbreiten und in Wechselwirkung treten, z.B. Radial-, Axial- oder Transversalflussmaschinen.

Es wird weiterhin unterschieden zwischen konzentrierten und verteilten Wicklungen. Konzentrierte Wicklungen (auch Steck- oder Zahnspulen genannt) haben kompakte Wickelköpfe und lassen sich relativ einfach herstellen.

Der Hauptvorteil von verteilten Wicklungen liegt darin, dass die magnetomotorische Kraft im Luftspalt zwischen Stator und Rotor der Maschine weniger Oberwellenanteil, das heißt einen geringeren Anteil unerwünschter Harmonischer der magnetomotorischen Kraft aufweist. Dadurch ergibt sich eine hohe Leistungsfähigkeit der elektrischen Maschine mit geringen Rotorverlusten, geringer Geräuschentwicklung und wenig Vibrationsproblemen.

In rein Batterie-elektrischen und in Großserie produzierten Fahrzeugen kommen deshalb als Antriebsmotore fast ausschließlich Radialflussmotoren mit verteilter Wicklung und Innenläufer zum Einsatz.

Die wichtigsten Ausführungen der verteilten Wicklungen sind:
1) Runddraht-Wicklung ("Round Wire", eng.) welche in den Stator durch die Nutöffnungen eingezogen wird.
2) Formstabwicklung in Form vieler einzelner Haarnadeln ("Hair Pin", eng.) welche axial in die Nuten des Stators gesteckt und anschließend zu einer meanderförmigen "Wellenwicklung" mechanisch umgeformt und mittels Laser- oder Widerstandsschweißen der Formstabenden verschalten werden.
3) Kontinuierliche Fromstabwicklung ("Continuous Hair Pin", eng.) die als meanderförmige Wellenwicklung vorgefertigt auf ein Trägerwerkzeug bzw. Dorn gewickelt wird und anschließend, in der Bohrung des Stators platziert, in die Nuten des Stators ausgespreizt wird.

Besonders die o. g. Formstabwicklungen 2) und 3) breiten sich zunehmend im Markt der e-Mobility aus. Eine weitere Ausführung der verteilten Wicklung, welche hauptsächlich bei elektrischen Großmaschinen wie Turbo-Generatoren eingesetzt wird, ist die
4) Formspulen-Wicklung ("Traction Coils", eng.), bei der die einzelnen baugleichen Formspulen von innen durch Bohrung des Stators in Nuten eingebracht werden.

Die Ausführungen 3) und 4) haben gemein, dass der Abstand zweier benachbarter Zahnköpfe an den jeweiligen Enden der an den Luftspalt zwischen Stator und Rotor angrenzenden Statorzähne mindestens so breit ausgeführt sein muss, dass die Formstab- bzw. Formspulen-Wicklung bei der Montage durch diese Öffnung in die Nut des Stators eingeschoben werden kann.

Bei Hair-Pin-Wicklungen (siehe Ausführung 2)) ergibt sich diese Beschränkung nicht, da die Formstäbe axial und nicht radial eingesteckt werden. Bei Runddraht-Wicklungen (siehe Ausführung 1)) verfügt das Leiter-Bündel über eine höhere Flexibilität und kann durch vergleichsweise enge Nutöffnungen eingezogen werden. Somit können Zahnköpfe bei Ausführung 3) und Ausführung 4) nur sehr klein oder gar nicht ausgeführt werden. Generell und abhängig von der Dimensionierung der Zahnbreite und Auslastung des weichmagnetischen Eisens des Zahns haben ausgeprägte Zahnköpfe Vorteile für die Drehmomentausbeute, geringes Nutrasten und reduzierte Rotorverluste.

Weiterhin bringt die zuvor beschriebene Art des Einbringens der Wicklung von Innen aus der Bohrung des Stators radial in dessen Nuten insbesondere für die Wicklungsarten 3) und 4) geometrische Limitierungen mit sich, da die Formstabwicklung bzw. die Formspulen zunächst komprimiert werden müssen bevor sie sich in ihrer End- und Einbauposition in den Nuten befinden. Neben der allgemeinen Beschränkung des Raumes für Vorrichtungs- und Automatisierungstechnik in der Statorbohrung führt das Komprimieren der final axial in den Nuten liegenden und radial übereinander gestapelten Leiterstäbe gleichermaßen zu einer Verformung der Wickelköpfe welche während des Vorgangs des Einbringens freigängig zueinander bleiben müssen und sich nicht berühren oder überschneiden dürfen.

Je stärker die Krümmung des von einer Spule eingeschlossenen Statorsegmentes ausgebildet bzw. je größer der Winkel zwischen den Loten der jeweiligen Leiterstäbe radial verlaufend durch die Rotationsachse der elektrischen Maschine ausgebildet ist, desto limitierter gestaltet es sich, die Wicklung gemäß o. g. geometrischen Einschränkung auszuführen. Zusammenfassend ergibt sich durch die beschriebenen Zusammenhänge eine Beschränkung des Verhältnisses Bohrungsdurchmesser des Stators zu seiner Anzahl an Nuten und zur Anzahl der Leiterstäbe in einer Nut. Die Wicklungsarten 3) und 4) bedingen somit eine elektrische Maschine mit relativ großem Durchmesser und vielen Nuten bzw. einer vergleichsweise niedrigen Anzahl an Leiterstäben übereinander.

Es besteht demnach ein Bedarf nach einer Stator-Ausführung, welche das Einbringen der verteilten Wicklung von außen ohne geometrische und fertigungstechnische Einschränkungen ermöglicht, was zu einer optimal ausgelegten elektrischen Maschine mit hohem Wirkungsgrad und dem Potential auf einen hohen Automatisierungsgrad und niedrige Herstellungskosten führen würde. Weiterhin besteht ein Bedarf nach einer Stator-Ausführung, welche ausgeprägte Zahnköpfe aufweist, was zu einer elektrischen Maschine mit hoher Drehmomentausbeute, geringen Nutrasten und reduzierten Rotorverlusten führen würde.

Zwar gibt es bereits Statoren mit konzentrierter Wicklung, bei denen der Stator unterteilt ist (beispielsweise CN203086252U). Allerdings sind derartige Anordnungen bei Statoren mit verteilter Wicklung nicht bekannt.

Als weitere Dokumente sind die WO 2019/233739 A1 sowie die US 2008/0061653 A1 bekannt.

### Gegenstand der Erfindung

Aufgabe der Erfindung ist es, einen Stator für eine elektrische Radialfluss-Maschine in Innenläuferbauweise mit verteilter Wicklung zur Verfügung zu stellen, welcher das Einbringen der verteilten Wicklung von außen ohne oder mit reduzierten geometrischen und fertigungstechnischen Einschränkungen ermöglicht.

Erfindungsgemäß wird ein Stator gemäß Anspruch 1 bereitgestellt. Weitere bevorzugte Ausführungsformen sind in den abhängigen Ansprüchen sowie nachfolgend beschrieben.

Der Stator für eine elektrische Radialfluss-Maschine in Innenläuferbauweise mit verteilter Wicklung umfasst: einen mehrere Zähne aufweisenden Zahnstern, wobei zwischen den Zähnen in Umfangsrichtung Statornuten vorgesehen sind und wobei die Zähne mit einem oder mehreren Stegen im zu einem Luftspalt zwischen Stator und Rotor weisenden Bereich verbunden sind, und einen Jochring, wobei der Zahnstern zumindest abschnittsweise innerhalb des Jochrings aufgenommen ist.

Der erfindungsgemäße Stator hat den Vorteil, dass das Einbringen einer Wicklung ohne oder mit stark reduziertem Aufwand ermöglicht wird, wodurch eine optimal ausgelegte elektrische Maschine mit hohem Wirkungsgrad bereitgestellt werden kann, die dabei mit hohem Automatisierungsgrad gefertigt werden kann. Auf diese Weise kann ein solcher Stator mit vergleichsweise geringen Herstellungskosten hergestellt werden.

In den Statornuten kann eine Wicklung aufgenommen sein. Hierbei ist die Wicklung als verteilte Wicklung vorgesehen. Einer der Vorteile einer verteilten Wicklung liegt darin, dass die magnetomotorische Kraft in einem Luftspalt zwischen Stator und Rotor der Maschine weniger Oberwellenanteil aufweist.

Ein Aspekt ist deshalb eine Stator-Anordnung für eine elektrische Innenläufer-Radialflussmaschine mit verteilter Wicklung, bei der die Zähne zwischen den Statornuten vom Joch (nachfolgend als "Jochring" bezeichnet) getrennt werden können.

Die Zähne sind miteinander durch mehrere (insbesondere dünne) Stege - vorzugsweise zwei Stege - am Luftspalt zwischen Stator und Rotor verbunden, um einen Zahnstern auszubilden.

Weiterhin ermöglicht die Erfindung die Ausgestaltung ausgeprägter Zahnköpfe, was zu einer elektrischen Maschine mit hoher Drehmomentausbeute, geringem Nutrasten und reduzierten Rotorverlusten führt. Die Zähne sind miteinander durch mehrere dünne Stege - vorzugsweise zwei Stege - am Luftspalt zwischen Stator und Rotor verbunden und bilden einen Zahnstern aus. Der am Luftspalt zwischen Stator und Rotor befindliche Steg kann individuell und elektromagnetisch optimal gestaltet werden und ersetzt somit den klassischen Zahnkopf.

Die Kontaktflächen der Zahnrücken zum Jochring sind in einer besonderen Ausführung mit einem Abschnitt für eine formschlüssige Verbindung ausgeführt. Nachfolgend wird eine positive Teilkreiskontur dargestellt. Ebenso möglich sind alternative Geometrien beispielsweise in Trapez- oder Dreieck-Form; sowohl radial nach Außen ("positiv") gerichtet oder nach Innen zur Rotationsachse der elektrischen Maschine hin ("negativ").

Weiterhin kann gemäß einer Ausführungsform eine Segmentierung des Jochrings entlang seines Umfangs beschrieben und/oder eine Segmentierung Zahnsterns entlang seines Umfangs. Es kann entweder der Jochring segmentiert werden, sowohl Jochring als auch der Zahnstern, oder auch nur der Zahnstern. Die Segmentierung ermöglicht überdies hinaus eine kostengünstige und hoch-automatisierte Fertigung.

Der Zahnstern und/oder der Jochring (oder die Segmente des Zahnsterns und/oder des Jochrings) können mit geschichteten/laminierten Blechen ausgebildet sein.

Die Segmentierung des Zahnsterns kann insbesondere den Einsatz von korn-orientiertem Blech in den Zahnsternsegmenten ermöglichen. Dieses aus dem Transformatorenbau bekannte und vermehrt in Axialflussmaschinen eingesetzte korn-orientierte Elektro-Blech hat eine magnetische Vorzugsrichtung. Entlang seiner magnetischen Vorzugsrichtung weißt kornorientiertes Blech im Vergleich zum klassischen nicht kornorientierten Elektroblech deutlich geringere Ummagnetisierungsverluste auf sowie eine höhere Magnetisierbarkeit, das heißt es kann ein geringeres Feld angelegt werden, um vergleichbare magnetische Feldstärken zu erreichen.

Durch den Einsatz von korn-orientiertem Blech kann eine elektrische Maschine mit höherer Leistungsdichte und geringeren Verlusten realisiert werden. Es stellt damit eine kostengünstige Alternative zu elektrischen Maschinen mit sehr fein laminierten Statoren oder mit Statoren aus Kobalt-Eisen-Blechen dar, welches zwar eine höhere Sättigungspolarisation aufweist aber um Faktoren teurer ist.

Weiterhin kann die Segmentierung entlang des Umfangs dazu dienen, die Blechsegmente aus Bandmaterial mit einer guten Ausnutzung des Materials und mit einem kostengünstigen und einfacheren Werkzeug in nur einem Schnitt zu stanzen, verglichen mit einem Folgeschnitt-Stanzwerkzeug, um geringe Fertigungskosten zu realisieren.

Eingangs wurde beschrieben, dass die Zähne miteinander durch mehrere dünne Stege am Luftspalt zwischen Stator und Rotor verbunden sind und so einen Zahnstern ausbilden. Die dünnen Stege können bevorzugt als Doppelsteg ausgeführt werden, um dem Zahnstern bzw. den Zahnsternsegmenten mehr Festigkeit zu verleihen. Gemäß dieser Ausführungsform werden die Zähne durch zwei Stege miteinander verbunden und eine Aussparung (nachfolgend auch "Freiraum" genannt) ist zwischen den beiden Stegen ausgebildet. Der Freiraum ("Aussparung") zwischen den Stegen kann unter Berücksichtigung einer optimalen Zahnkopfgeometrie so gestaltet sein, dass der Freiraum Teile eines Kreises abbildet, also eine kreisförmige Geometrie zum Durchführern eines Stabes bereitstellt.

Gemäß einer weiteren Ausführungsform ist es vorgesehen, dass der Zahnstern durch eine Mehrzahl an Ringen segmentiert ist, wobei bevorzugt ist, dass die Zahnsternsegmente in axialer Richtung zueinander gestaffelt angeordnet sind. Diese Anordnung kann insbesondere bei einer Anordnung zum Einsatz kommen, bei der der Zahnstern in Umfangsrichtung mehrere Segmente aufweist.

Um die Zahnsternringe und/oder die Zahnsternsegmente während des Aufbaus des Zahnsterns zu fixieren und dem Paket aus Einzelblechen mechanische Stabilität zu verleihen können Stäbe, oder Bolzen aus bevorzugt elektrisch nicht leitfähigem Material oder Material mit verringerter elektrischer Leitfähigkeit durch diese kreisförmigen Aussparungen (Freiraume) in axialer Richtung der Maschine geschoben werden. Dies ermöglicht bei einer Segmentierung des Zahnsterns in einzelne Zahnsternsegmente ein Verschränken der Zahnsternsegmentpakete längs der Rotationsachse der Maschine. Das Verschränken der einzelnen Pakete dient der Verbesserung der mechanischen Stabilität der Anordnung. Außerdem können Normlängen gefertigt und die Maschine auf diese Art und Weise mit Standardpaketen kostengünstig skaliert werden. Als elektrisch nicht leitfähiges Material oder Material mit verringerter elektrischer Leitfähigkeit kann beispielsweise Edelstahl, Keramik und/oder Kunststoff eingesetzt werden.

Anstatt oder zusätzlich der Bolzen können Rohre in die Aussparungen zwischen den Stegen eingesetzt werden. Durch diese Rohre, welche sich zwischen Wicklung und Luftspalt des Stators und Rotors der elektrischen Maschine befinden, kann ein Kühlmedium geführt werden, um eine effektive Kühlung des Stators und vor allem des Rotors der elektrischen Maschine bereit zu stellen. Diese Art der Kühlung führt zu einer höheren Leistungsdichte der elektrischen Maschine, da Stator und Rotor besser gekühlt und die Maschine somit stärker ausgelastet werden kann. Die Rohre können aus einem elektrisch nicht oder schlecht leitfähigem Material oder Material mit verringerter elektrischer Leitfähigkeit, z.B. aus Edelstahl, Keramik und/oder Kunststoff ausgebildet sein.

Es ist bevorzugt, dass der Jochring derart segmentiert ausgeführt ist, dass Jochringsegmente über Verbindungsabschnitte für eine formschlüssige Verbindung verfügen. Auf diese Weise kann beispielsweise Drehmoment zwischen Stator und einem den Stator umgebenden Gehäuse übertragen werden.

Es ist bevorzugt, dass der Jochring derart segmentiert ausgeführt ist, dass der Jochring in axialer Richtung segmentiert ist. Dabei können die Jochringsegmente über Ösen verfügen, um den Jochring und somit den gesamten Stator mittels Stäben oder Rohren zu fixieren. Mittels der genannten Stäbe oder Rohre kann ein Drehmoment des Stators an die Lagerschilde übertragen werden. Mittels der Rohre kann ein Kühlmittel geführt werden, um den Jochring des Stators zu kühlen.

Insbesondere kann es vorgesehen sein, dass der Jochring derart segmentiert ausgeführt ist, dass der Jochring sowohl längs des Umfang des Stators als auch in axialer Richtung segmentiert ist.

Die Segmentierung des Jochrings entlang seines Umfangs in Jochringsegmente ist vorteilhaft, da ein geschlossener Jochring nach Einlegen der Wicklung von außen nicht mehr axial über den Zahnstern geschoben werden kann, da die Wickelköpfe vor allem bei Formspulen den Innendurchmesser des Jochrings in radialer Richtung überragen und so ein Aufschieben längs der Drehachse (axial) versperren. In Sonderfällen kann diese Beschränkung durch eine asymmetrische Ausführung der Wickelköpfe der Formspulenwicklung überwunden werden.

Die Segmentierung des Jochrings in Jochringsegmente stellt die gleichen Vorteile hinsichtlich Stanzbarkeit und axialer Skalierung wie beschrieben für Zahnsternsegmente bereit.

In einer speziellen Ausführungsform weist das Jochringsegment Erhöhungen an den beiden Außenseiten auf. Diese Erhöhungen dienen als formschlüssige Verdrehsicherung ähnlich einer Nut-Feder-Verbindung gegen ein das Statorpaket umschließende Gehäuse.

In einer weiteren Ausführungsform weist das Jochringsegment eine oder mehrere Ösen auf. Durch die Bohrung der Ösen können Stäbe geschoben werden um die Jochringsegmente zu einem stabilen Jochring zu fixieren. Diese Ausführung ist besonders vorteilhaft, da sie erlaubt, das Statorpaket umfassende Gehäuse als kostspieliges Bauteil entfallen zu lassen.

Bei elektrischen Maschinen welche in Getriebe mit direkter Ölkühlung des Stators integriert sind oder bei Maschinen mit direkter Hohlleiterkühlung der Wicklung ist dieses Gehäuse aus Gründen der Kühlung nicht zwingend erforderlich, da die indirekte Kühlfunktion über das Gehäuse durch die direkte Kühlung am Statoreisen oder in der Wicklung selbst ersetzt wird.

Die Ausführungsform von zwei Ösen pro Jochringsegment ist besonders vorteilhaft, da das Statorpaket durch axiales Verdrehen der Ringe aus Jochringsegmenten eine höhere Stabilität bekommt und sich die Jochringsegmente zueinander selbst über axiale Stäbe durch die Ösen fixieren, ohne dass ein weiteres Bauteil zur Sicherung der Jochringsegmente benötigt wird.

Es ist bevorzugt, dass eine Nutisolation um die Wicklung in den Statornuten vorgesehen ist. Dabei kann es vorgesehen sein, dass die Nutisolation zweiteilig ausgeführt ist, wobei der Zahnstern in einer weiteren Ausführungsform des Zahnsterns bzw. des Zahnsternsegments eine Stufe in der Nut in Richtung des Außendurchmessers aufweist. Diese Stufe soll Platz für die zweiteilige Nutisolation schaffen, welche in Form einer doppelten U-Lage ausgeführt ist.

Ferner wird erfindungsgemäß ein Verfahren zur Montage eines Stators nach Anspruch 15 bereitgestellt, insbesondere eines Stators gemäß einem der vorangegangenen Aspekte. Das Verfahren umfasst die Schritte:
Bereitstellen eines mehrere Zähne aufweisenden Zahnsterns, wobei zwischen den Zähnen in Umfangsrichtung Statornuten vorgesehen sind und wobei die Zähne mit mehreren Stegen im zu einem Luftspalt zwischen Stator und Rotor weisenden Bereich verbunden sind, und
Anbringen eines Jochrings längs der Motor-Rotationsachse um den Zahnstern.

Gemäß dem genannten Verfahren kann die Montage des Stators deutlich vereinfacht werden. Gemäß einer Ausführungsform wird eine Wicklung in verteilter Anordnung in die Statornuten eingebracht.

Die Reihenfolge während der Montage des Stators kann bei Einsatz eines Zahnsternsegmente aufweisenden Zahnsterns folgendermaßen ablaufen:
1. Zahnsternsegmente zu Zahnstern um und längs der Motor-Rotationsachse anordnen; Fixierung durch Bolzen, Stifte oder Rohre.
2. Erste Lage einer Nutisolation in Nut einlegen.
3. Wicklung/ Spulen einsetzen.
4. Zweite Lage Nutisolation aufstecken.
5. Jochring(segmente) um und längs der Motor-Rotationsachse um den Zahnstern, komplettiert mit Wicklung und Nutisolation anbringen und fixieren.
6. Finale mechanisch robuste Fixierung der Statoranordnung durch Einschub von Stäben in die Ösen des Jochrings bzw. durch das Aufschrumpfen eines Gehäuses.

Die Schritte 2 und 4 können beim Einsetzen einer Wicklung ohne Nutisolation entfallen.

Die voranstehend aufgelisteten Ausführungsformen können einzeln oder in beliebiger Kombination abweichend von den Rückbezügen in den Ansprüchen zueinander zur Ausgestaltung der erfindungsgemäßen Anordnungen verwendet werden.

Diese und andere Aspekte der Erfindung werden im Detail in den Abbildungen wie folgt gezeigt.

### Kurze Beschreibung der Abbildungen

- Fig. 1a: zeigt einen unsegmentiertem Zahnstern und einen unsegmentierten Jochring für einen Stator einer Innenläufer-Radialflussmaschine mit verteilter Wicklung gemäß einer ersten Ausführungsform in Einzelansicht der beiden Komponenten in einem Schnitt senkrecht zur Rotationsachse des Stators;
- Fig. 1b: zeigt den Zahnstern und den Jochring gemäß Fig. 1a im zusammengesetzten Zustand;
- Fig. 2a: zeigt ein Zahnsternsegment eines segmentierten Zahnsterns für einen Stator gemäß einer ersten Ausführungsform im Schnitt senkrecht zur Rotationsachse des Stators;
- Fig. 2b: zeigt den segmentierten Zahnstern gemäß der ersten Ausführungsform mit kornorientiertem Blech im Schnitt senkrecht zur Rotationsachse des Stators;
- Fig. 3a-3c: zeigen verschiedene Modifikationen von Zahnsternsegmenten für einen erfindungsgemäßen Stators mit Doppelsteg und Teilkreis-förmiger Aussparung (Fig. 3a), mit zusätzlicher Aussparung für eine zweiteilig Nutisolation (Fig. 3b) und, nicht der Erfindung entsprechend, mit nur einem Steg (Fig. 3c) im Schnitt senkrecht zur Rotationsachse des Stators;
- Fig. 4a: zeigt ein Zahnsternsegment gemäß einer weiteren Modifikation mit Bolzen;
- Fig. 4b: zeigt einen teilweise verschränkt aus solchen Segmenten zusammengesetzten segmentierten Zahnstern gemäß einer weiteren Modifikation, jeweils in perspektivischer Ansicht;
- Fig.5a: zeigt ein Zahnsternsegment einer weiteren Modifikation eines erfindungsgemäßen Stators mit segmentiertem Zahnstern, Nutisolation und Wicklung im Schnitt senkrecht zu seiner Rotationsachse;
- Fig. 5b: zeigt das Zahnsternsegment gemäß Fig. 5a in perspektivischer Ansicht;
- Fig. 6a: zeigt einen segmentierten Jochring einer ersten Modifikation für einen erfindungsgemäßen Stators in einem Schnitt senkrecht zur Rotationsachse des Stators;
- Fig. 6b-6c: zeigen verschiedene Modifikationen der Jochringsegmente in einem Schnitt senkrecht zur Rotationsachse des Stators;
- Fig.7: zeigt eine zweite Ausführungsform eines erfindungsgemäßen Stators mit segmentiertem Jochring, verankert durch Stäbe in den Ösen und ohne Gehäuse, in perspektivischer Ansicht;
- Fig. 8a: zeigt einen Ausschnitt einer dritten Ausführungsform eines erfindungsgemäßen Stators komplettiert durch Isolation, Wicklung und segmentiertem Jochring, sowie Rohren zur Kühlung im Schnitt senkrecht zur Rotationsachse
- Fig. 8b: zeigt den Stator gemäß der dritten Ausführungsform in perspektivischer Ansicht;
- Fig. 9: zweigt den Stator der dritten Ausführungsform (Figuren 8a und 8b) des erfindungsgemäßen Stators eingesetzt in ein Gehäuse mit integrierten Kühlkanälen in perspektivischer Ansicht;
- Fig. 10a: zeigt einen segmentierten Jochring gemäß einer weiteren Modifikation mit gestaffelter Anordnung
- Fig. 10b: zeigt eine Detailansicht eines Jochringsegments des Jochrings gemäß Fig. 10a.
- Fig. 11: zeigt einen Ausschnitt eines Stators gemäß einer vierten Ausführungsform, wobei die Jochringsegmente in Blockform ausgebildet sind.

### Detaillierte Beschreibung der Ausführungsbeispiele

Anhand der Figuren werden beispielhafte Ausführungsformen der Erfindung beschrieben. Einzelne Merkmale der Ausführungsformen sowie deren Modifikationen können miteinander kombiniert werden, um weitere Ausführungsformen auszubilden.

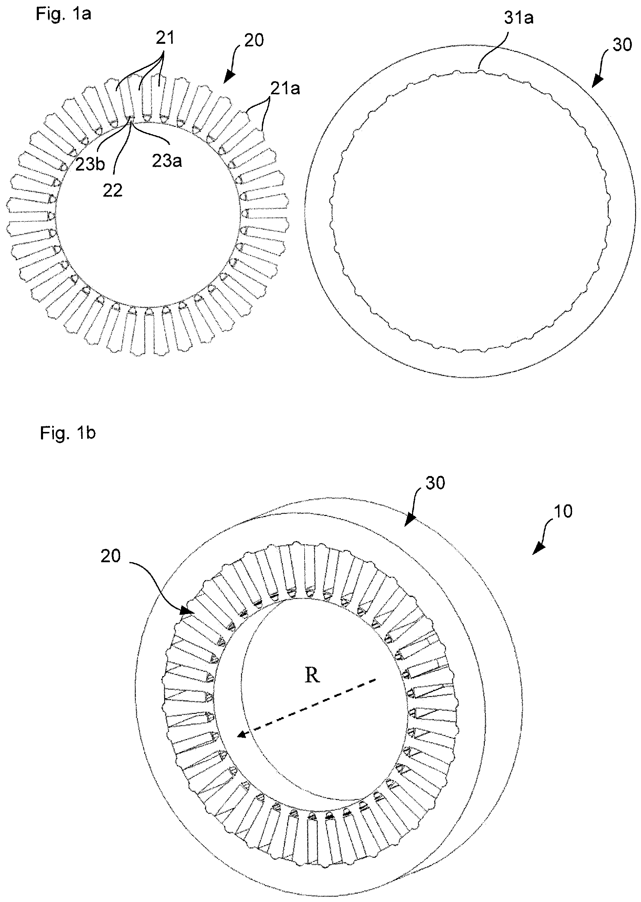

Fig. 1b zeigt eine erste Ausführungsform eines erfindungsgemäßen Stators 10 einer Innenläufer-Radialflussmaschine mit verteilter Wicklung, umfassend einen (unsegmentierten) Zahnstern 20 und einen (unsegmentierten) Jochring 30. Beide Komponenten sind aus einem weichmagnetischen Werkstoff gefertigt, üblicherweise Elektroblech, welches in Richtung der Rotationsachse R fein laminiert ist, um Wirbelstromverluste im Eisen zu unterdrücken. Eine Ausführung aus Sintereisen (engl. "SMC") wäre ebenfalls möglich.

Die Abbildungen zeigen die beiden Komponenten zunächst im Schnitt senkrecht zu einer Rotationsachse R des Stators (Fig. 1a) und im zusammengebauten Zustand des Stators 10, jedoch ohne Wicklung und Isolation um die Wicklung in perspektivischer Ansicht (Fig. 1b).

Der Zahnstern 20 weist eine Vielzahl von Zähnen 21 auf, die an einer äußeren Umfangsseite Vorsprünge 21a umfassen. Die Vorsprünge 21a können in Aussparungen 31a des Jochrings 30 eingeführt werden, um den Zahnstern 20 formschlüssig mit dem Jochring 30 zu verbinden.

Die Zähne 21 sind so voneinander beabstandet, dass in die zwischen den Zähnen 21 ausgebildeten Nuten im montierten Zustand die Wicklungen mit Isolationssystem aufgenommen werden können. Die Zähne 21 sind durch zwei Stege 23a, 23b miteinander verbunden, wobei die Stege 23a, 23b zwischen einer Nut und einer Aussparung 22 sowie der Aussparung 22 und einer inneren Umfangsseite des Zahnsterns 20 ausgebildet sind. Die Aussparung 22 hat im Ausführungsbeispiel ein teilkreisförmiges Segment sowie einen ein sich entlang der Nut erstreckendes Segment. Die Stege 23a, 23b können zum Beispiel mittels Stanzen der Aussparung 22 relativ dünn ausgeführt werden.

Bei der Montage werden Wicklungen in die Nuten zwischen den Zähnen 21 eingeführt und nachfolgend der Zahnstern 20 derart in den Jochring 30 eingeschoben, dass die Vorsprünge 21a der Zähne 21 in die Aussparungen 31a des Jochrings 30 eingeführt werden.

Ferner kann durch das Verstiften durch den Freiraum der Aussparung die Festigkeit der einzelnen weichmagnetischen Bleche zueinander erhöht werden oder der (teil-) kreisförmige Spalt kann genutzt werden, um Rohre zur Kühlung im Stator zu integrieren.

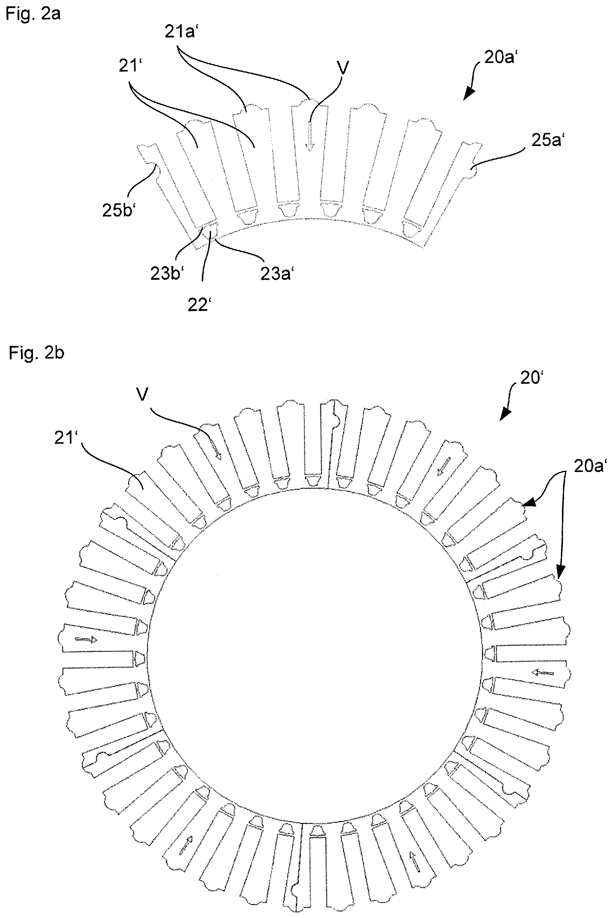

Fig.2a zeigt ein Zahnsternsegment 20a' eines segmentierten Zahnsterns 20' für einen Stator im Schnitt senkrecht zu seiner Rotationsachse. Der Zahnstern 20', der beispielsweise in einen Jochring 30 gemäß Fig. 1a eingesetzt werden kann, ist segmentiert ausgeführt und setzt sich aus einzelnen Zahnsternsegmenten 20a' zusammen. Die Zahnsternsegmente 20a' sind aus korn-orientiertem Blech ausgeführt, welches eine magnetische Vorzugsrichtung V aufweist, die radial auf die Rotationsachse des Stators zeigt.

Ein Zahnsternsegment 20a' umfasst mehrere Zähne 21', die, ähnlich wie die Zähne des Zahnsterns der ersten Ausführungsform, mit Vorsprüngen 21a' versehen sind. Ferner sind die Zähne 21' über Stege 23a' und 23b' miteinander verbunden, wobei die Stege 23a' und 23b' durch eine Aussparung 22' voneinander getrennt sind.

Die in Umfangsrichtung äußeren Zähne 21' des Zahnsternsegments 20a' sind geteilt und weisen einen Befestigungsvorsprung 25a' (in Fig. 2a der zur rechten Seite weisende Zahn des Zahnsternsegments 20a') sowie eine Befestigungsvertiefung 25b' (in Fig. 2a der zur linken Seite weisende Zahn des Zahnsternsegments 20a') auf, sodass benachbarte Zahnsternsegmente 20a' durch In-Eingriff-Bringen des Befestigungsvorsprungs 25a' eines Zahnsternsegments mit der Befestigungsvertiefung 25b' eines benachbarten Zahnsternsegments durch eine formschlüssige Verbindung miteinander verbunden werden können. Im zusammengebauten Zustand ist der Zahnstern 20' in Fig. 2b dargestellt.

Bei der Montage werden Wicklungen in die Nuten zwischen den Zähnen 21' eingeführt und nachfolgend der komplettierte Zahnstern 20' derart in einen Jochring eingeschoben, dass die Vorsprünge 21a' der Zähne 21' in entsprechende Aussparungen des Jochrings eingeführt werden.

Eine erhöhte Stabilität einzelner Zahnsternsegmente 20a' zueinander kann zusätzlich mittels Befestigungsvorsprungs 25a' und der Befestigungsvertiefung 25b' erreicht werden, wobei der Befestigungsvorsprung 25a' in der hier beschriebenen Ausführungsform beispielhaft in Form eines Teilkreises realisiert ist. Weitere formschlüssige Geometrien sind frei wähl- und kombinierbar, um eine radiale und tangentiale Verzahnung der Zahnsternsegmente 20a' zu- bzw. miteinander zu realisieren.

Entsprechendes gilt für die Vorsprünge 21a' am äußeren Durchmesser des Zahnes 21', der den Zahnstern zum Jochring formschlüssig verzahnen soll.

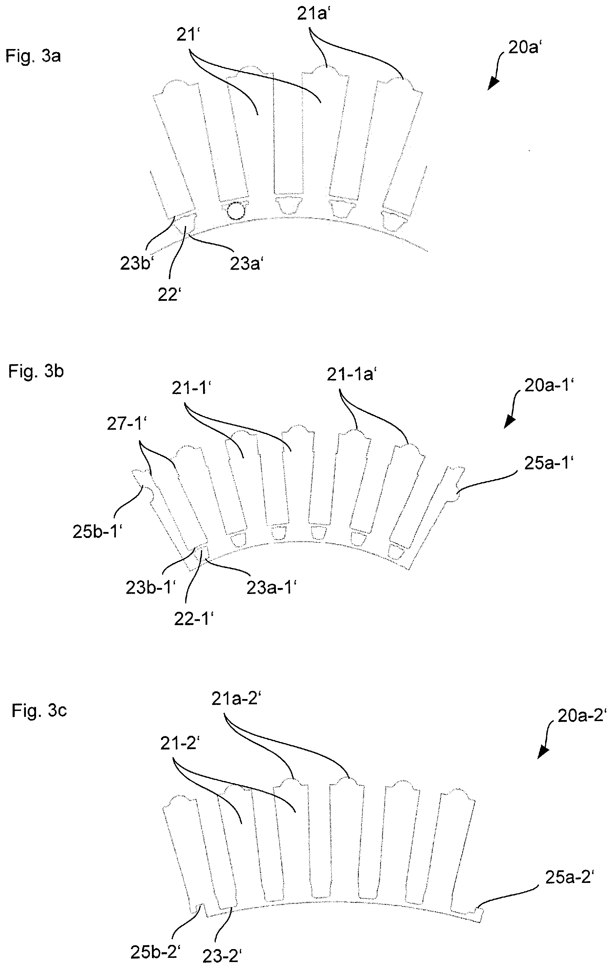

Fig. 3a zeigt im Detail einen Ausschnitt des in Fig. 2a gezeigten Zahnsternsegments 20a'. Weitere Modifikationen von Zahnsternsegmenten mit zwei Stegen 23a-1', 23b-1' (Fig. 3b) und einem Steg 23-2' (Fig. 3c - welche nicht der Erfindung entspricht), jeweils im Schnitt senkrecht zu seiner Rotationsachse des Stators, sind in weiteren Abbildungen dargestellt.

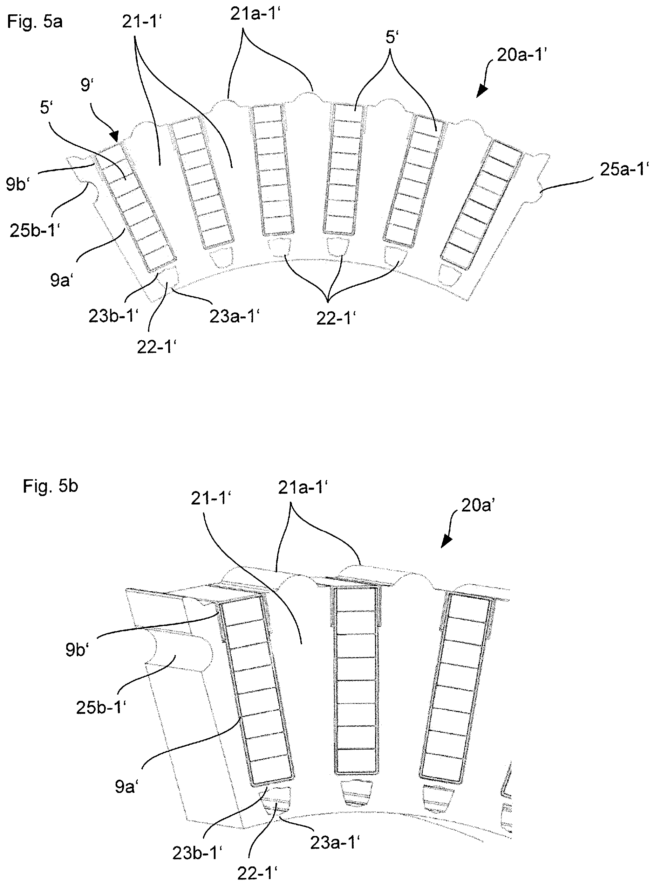

Das in Fig. 3b dargestellte Zahnsternsegment 20a-1' umfasst mehrere Zähne 21-1', die mit Vorsprüngen 21-1a ' versehen sind. Die Zähne 21-1' sind mittels Stegen 23a-1' und 23b-1' miteinander verbunden, wobei die Stege 23a-1' und 23b-1' durch eine Aussparung 22-1' voneinander getrennt sind. Die in Fig. 3b dargestellte Modifikation unterscheidet sich von derjenigen gemäß Fig. 3a in der Ausgestaltung der Aussparung 22-1'. Ferner weist das Zahnsternsegment 20a' Aussparungen 27-1' auf, um Raum für eine zweiteilig Nutisolation (siehe hierzu Figur 5) bereitzustellen.

Ähnlich wie bei der in Fig. 3a dargestellten Ausführungsform sind die in Umfangsrichtung äußeren Zähne 21-1' des Zahnsternsegments 20a-1' geteilt und weisen einen Befestigungsvorsprung 25a-1' (in Fig. 3a der zur linken Seite weisende Zahn des Zahnsternsegments 20a-1') sowie eine Befestigungsvertiefung 25b-1' (in Fig. 3a der zur rechten Seite weisende Zahn des Zahnsternsegments 20a-1') auf, sodass benachbarte Zahnsternsegmente 20a-1' durch In-Eingriff-bringen des Befestigungsvorsprungs 25a-1' und einer Befestigungsvertiefung 25b' eines benachbarten Zahnsternsegments miteinander verbunden werden können.

Bei der Montage werden Wicklungen in die Nuten zwischen den Zähnen 21-1' eingeführt und nachfolgend der komplettierte Zahnstern derart in einen Jochring eingeschoben, dass die Vorsprünge 21a-1' der Zähne 21-1' in entsprechende Aussparungen des Jochrings eingeführt werden.

Das in Fig. 3c dargestellte nicht erfindungsgemäße Zahnsternsegment 20a-2' umfasst mehrere Zähne 21-2', die mit Vorsprüngen 21-2a' versehen sind. Die Zähne 21-2' sind mittels eines Stegs 23-2' verbunden. Die in Fig. 3c dargestellte Modifikation unterscheidet sich von derjenigen gemäß Fig. 3a und Fig. 3b, dass in dieser Ausgestaltung keine Aussparung zum Bereitstellen zweier Stege vorgesehen ist. Mit anderen Worten umfasst die in Fig. 3c dargestellte Modifikation einen Steg zwischen benachbarten Zähnen, und entspricht somit nicht der Erfindung.

Die in Umfangsrichtung äußeren Zahnsternsegmente 20a-2'weisen einen Befestigungsvorsprung 25a-2' (in Fig. 3c der zur rechten Seite weisende Zahn des Zahnsternsegments 20a-2') sowie eine Befestigungsvertiefung 25b-2' (in Fig. 3c der zur linken Seite weisende Zahn des Zahnsternsegments 20a-2') auf, sodass benachbarte Zahnsternsegmente 20a-2' durch In-Eingriff-bringen des Befestigungsvorsprungs 25a-2' und einer Befestigungsvertiefung 25b-2' eines benachbarten Zahnsternsegments miteinander verbunden werden können.

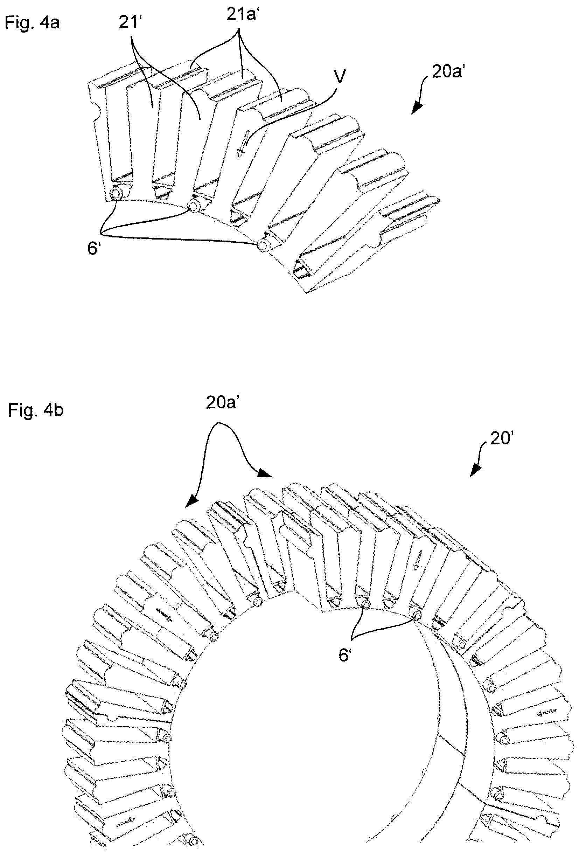

Fig.4a zeigt ein Zahnsternsegment 20a' und Fig. 4b einen aus mehreren Zahnsternsegmenten, noch nicht vollständig zusammen gesetzten Zahnstern 20' jeweils in perspektivischer Ansicht. Die weichmagnetischen Einzelbleche werden durch Bolzen 6' zueinander zu einem Zahnsternsegment 20a' fixiert. In einer weiteren Ausführung wird nur jeder zweite Freiraum (Aussparung) durch einen Bolzen 6' belegt und die Bolzen 6' sind in einer weiteren Ausführung länger als die axiale Länge des Zahnsternsegmentes. Durch entsprechende Teilung des Zahnsterns 20a' in mehrere Ringe entlang der Rotationsachse des erfindungsgemäßen Stators und durch Versetzen ("Staffeln", "Schränken") der Segmentringe 20a' um einen oder mehrere Zähne soll erreicht werden, dass sich die magnetische Vorzugsrichtung V gleichmäßig um den Umfang des Stators verteilt und ebenfalls, dass sich die mechanische Unterbrechung zwischen benachbarten Zahnsternsegmenten 20a' gleichmäßig um die Drehachse des Stators verteilt.

Zur kostengünstigen Bereitstellung der Bolzen 6' werden diese bevorzugt zylindrisch ausgeführt und mit Fase versehen; es sind aber auch alternative Geometrien dieses Bauteils möglich, falls sich spezielle Zahnkopf-Geometrien als elektromagnetisch vorteilhaft zeigen.

Fig.5a zeigt eine weitere Ausführungsform des segmentierten Zahnsternsegments 20a-1' komplettiert durch Wicklung 5' und Nutisolation 9' im Schnitt senkrecht zur Rotationsachse eines erfindungs-gemäßen Stators, und Fig. 5b zeigt eine perspektivische Ansicht hiervon.

Die Nutisolation 9' kann, muss aber nicht zweiteilig ausgeführt werden. Im Ausführungsbeispiel ist eine zweiteilige Nutisolation 9' mit einer ersten Lage 9a' und einer zweiten Lage 9b' vorgesehen. Eine zweiteilige Ausführung kann prozesstechnische Vorteile bei der Montage der Wicklung 5' radial von außen haben. Zunächst wird die erste U-förmige Lage 9a in die Nut eingelegt; dann die verteilte Wicklung 5' eingeschoben bzw. aufgefädelt und abschließend die zweite Lage Nutisolation 9b' über die in radialer Richtung äußeren Leiter der Wicklung geschoben, weshalb in dieser Ausführung eine Stufe im Zahn 21-1' des Zahnsternsegments 20a' vorgesehen ist, um die zweite Lage 9b' der Nutisolation 9' aufzunehmen.

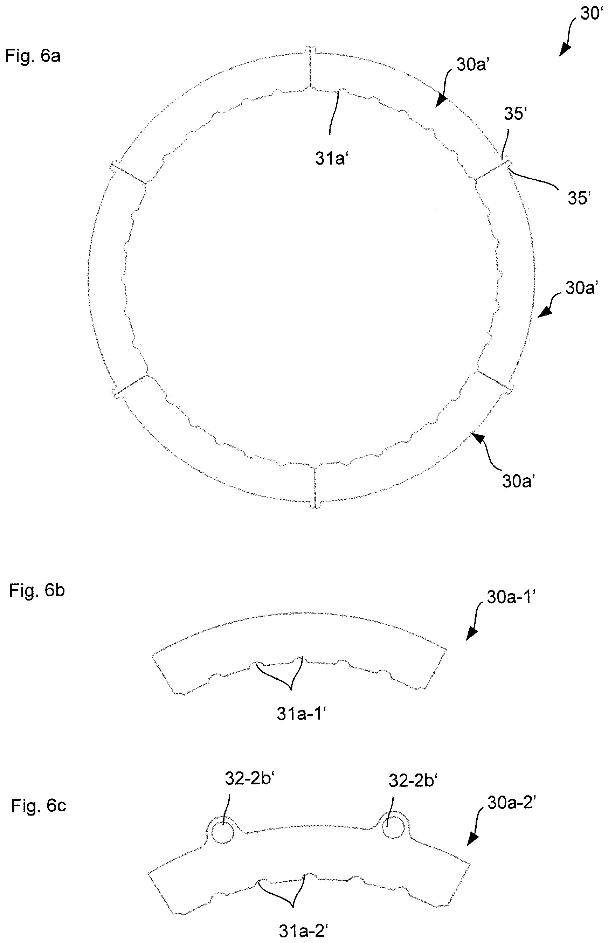

Fig. 6a zeigt eine Ausführungsform eines segmentierten Jochrings 30', umfassend Jochringsegmente 30a', die zum Jochring 30' zusammengefügt sind.

Durch die segmentierte Anordnung des Jochrings 30' verliert der Aufbau des Stators im Vergleich zur einteiligen Standardbauweise von Statoren an mechanischer Bestimmtheit und Steifigkeit, um Drehmomente sicher über die übliche Presspassung zwischen Stator und Gehäuse zu übertragen. Um das Drehmoment sicher zu übertragen empfehlen sich deshalb besondere Ausführungen des segmentierten Jochrings 30' mit mechanischem Verbindungsabschnitten 35' integriert die Jochringsegmente 30a'. Die Jochringsegmente 30a' weisen Aussparungen 31a' auf. Bei der Montage wird ein Zahnstern derart in den Jochring 30' eingeschoben, dass Vorsprünge der Zähne des Zahnsterns in die Aussparungen 31a' des Jochrings 30' eingeführt werden.

Fig. 6b zeigt eine Modifikation eines Jochringsegments 30a-1', das sich dadurch von dem in Fig. 6a darstellten Jochringsegment 30a' unterscheidet, dass keine Verbindungsabschnitte vorgesehen sind. Das Jochringsegments 30a-1' weist jedoch, ähnlich des in Fig. 6a darstellten Jochringsegments 30a', Aussparungen 31-1a' auf.

Bei der in Fig. 6c dargestellten Modifikation ist das Jochringsegment 30a-2' mit einer oder mehreren Ösen 32-2b' zur Drehsicherung und Fixierung des Stators durch Stäbe durch die Ösen 32-2b' der Jochringsegmente 30a-2' und mit Verankerung in den Lagerschilden der elektrischen Maschine. Kreisrunde Ösen sind besonders von Vorteil, da Rohre oder Stäbe kostengünstig bereitgestellt werden können. Außerdem ist die spezielle Ausführung mit zwei Ösen pro Jochringsegment besonders vorteilhaft da die Jochringsegmentringe 30a-2' um die Hälfte eines solchen Segmentes verschränkt werden können. In einer weiteren besonderen Ausgestaltung wird Kühlmittel zusätzlich durch die Rohre geführt um eine weitere Kühlung für den Stator bereit zu stellen.

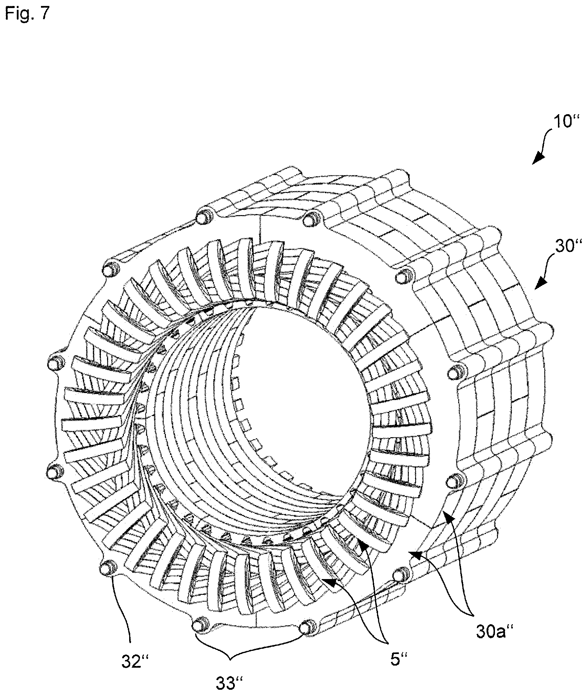

Fig.7 zeigt einen solchen erfindungsgemäßen Stator 10" mit Wicklung 5" ohne Gehäuse und mit segmentiertem Jochring 30", verankert durch Stäbe 33" in Ösen der Jochringsegmente 30a" mit Verschränkung der segmentierten Jochringe 30a" wie in Figur 6a, 6b beschrieben, in perspektivischer Ansicht.

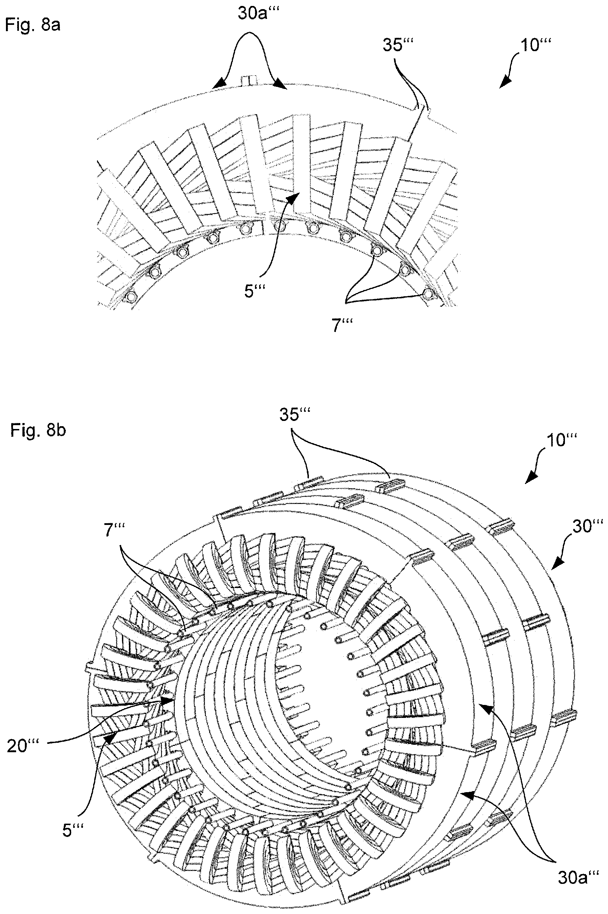

Fig. 8a zeigt einen Abschnitt einer dritten Ausführungsform eines erfindungsgemäßen Stators 10‴ mit Wicklung 5‴ ohne Gehäuse und mit segmentiertem Jochring 30". In Fig. 8b werden die Jochringsegmente 30a‴ mit Formschluss und gegenseitiger Verschränkung in perspektivischer Ansicht im Schnitt senkrecht zur Rotationsachse dargestellt. Weiterhin hat dieser Stator Rohre 7‴ zum Durchführen eines Kühlmittels in einer Aussparung zwischen Stegen (siehe hierzu beispielsweise Fig. 3a oder Fig. 3b) des segmentierten und verschränkten Zahnsterns 20‴ zur Bereitstellung einer sehr effizienten Kühlung des Stators und insbesondere des Rotors der elektrischen Maschine. Die Rohre 7‴ können aus Edelstahl, Keramik und/oder Kunststoff ausgebildet sein.

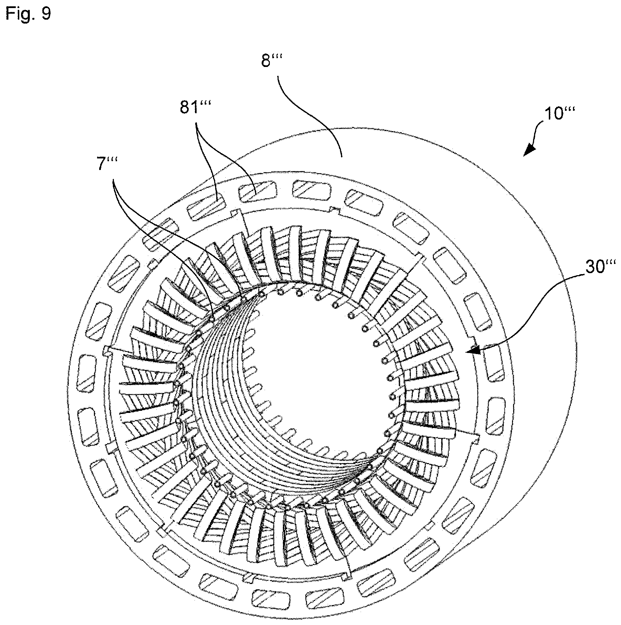

Fig.9 zeigt den gleichen erfindungsgemäßen Stator 10‴ gemäß Fig. 8b mit Rohren 7‴ zur effizienten Kühlung der Maschine erweitert durch ein äußeres Gehäuse 8‴ mit weiteren Kühlkanälen 81‴ in perspektivischer Ansicht.

Weitere Ausführungsformen eines erfindungsgemäßen Stators ohne Kühlkanäle im Gehäuse, aber alternativ mit direkter Kühlung durch Hohlleiter, können aus diesen, sowie allen vorangestellt beschriebenen Merkmalen beliebig kombiniert und abgeleitet werden.

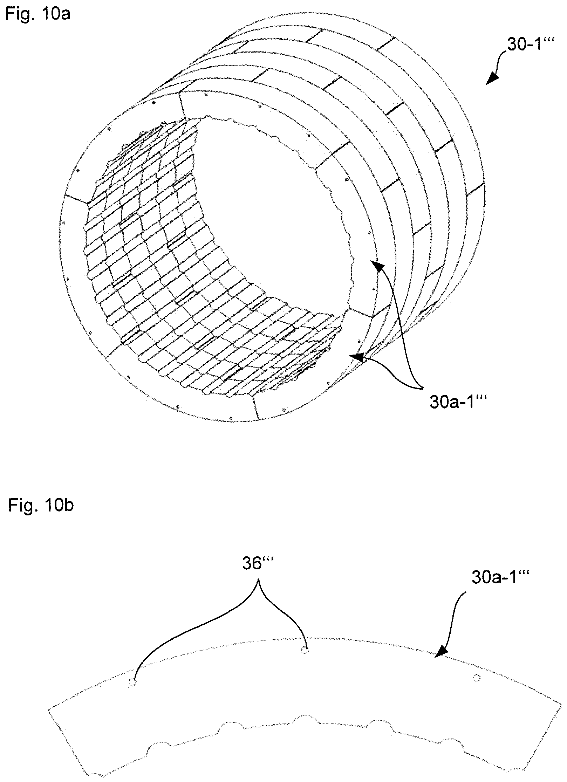

In Fig. 10a, 10b wird ein segmentierter Jochring 30-1‴ gemäß einer weiteren Modifikation dargestellt, wobei der Jochring 30-1‴ eine Vielzahl von gestaffelt angeordneten Jochringsegmenten 30a-1‴ umfasst. Durch die gestaffelte Anordnung der Jochringsegmente 30a-1‴ wird eine vereinfachte Montage bei gleichzeitig hoher Steifigkeit des Jochrings gewährleistet.

Jeder der Jochringsegmente 30a-1‴ ist mit mehreren Bohrungen 36‴ versehen, in die jeweils ein Stab aus einem nicht leitfähigen Material/ Material mit verringerter elektrischer Leitfähigkeit oder eine Masse aus einem aushärtbaren, nicht elektrisch leitenden Material, eingeführt wird, um somit eine Verbindung der jeweiligen Jochringsegmente zueinander in axialer Richtung zu gewährleisten. Somit wird eine zylindrische Außenkontur des Jochrings bereitgestellt, wobei eine Segmentierung und Fixierung ermöglicht wird, wodurch ein Überschleifen und Einpressen in ein Gehäuse möglich ist.

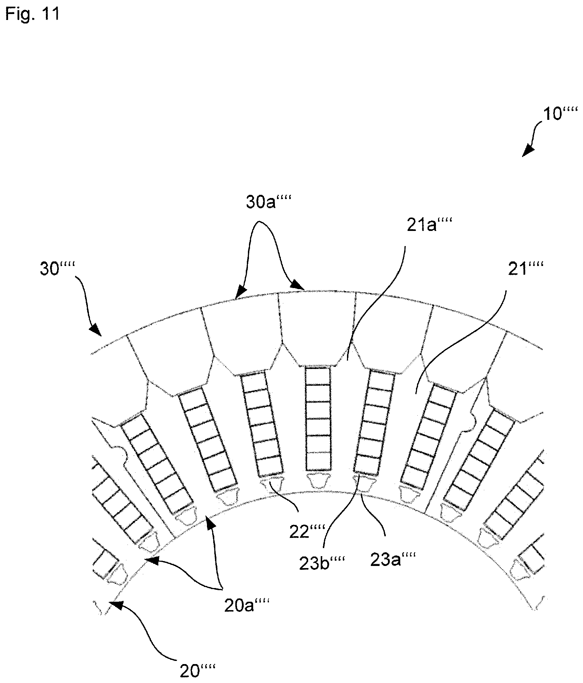

Fig. 11 zeigt eine vierte Ausführungsform eines Abschnitts eines Stators 10ʺʺ, der einen segmentierten Jochring 30ʺʺ sowie einen segmentierten Zahnstern 20ʺʺ aufweist. Der Zahnstern 20ʺʺ weist eine Vielzahl von Zähnen 21ʺʺ auf, die an einer äußeren Umfangsseite Vorsprünge 21aʺʺ umfassen. Die Vorsprünge 21aʺʺ können in zwischen Jochringsegmenten 30aʺʺ gebildeten Aussparungen 31aʺʺ des Jochrings 30ʺʺ eingeführt werden, um den Zahnstern 20ʺʺ mit dem Jochring 30ʺʺ zu verbinden.

Die Zähne 21ʺʺ sind so voneinander beabstandet, dass in die zwischen den Zähnen 21ʺʺ ausgebildeten Nuten im montierten Zustand die Wicklungen mit Isolationssystem aufgenommen werden können. Die Zähne 21ʺʺ sind durch zwei Stege 23aʺʺ, 23bʺʺ miteinander verbunden, wobei die Stege 23aʺʺ, 23b zwischen einer Nut und einer Aussparung 22ʺʺ sowie der Aussparung 22ʺʺ und einer inneren Umfangsseite des Zahnsterns 20ʺʺ ausgebildet sind. Die Aussparung 22ʺʺ hat im Ausführungsbeispiel ein teilkreisförmiges Segment sowie einen ein sich entlang der Nut erstreckendes Segment. Die Stege 23aʺʺ, 23bʺʺ können zum Beispiel mittels Stanzen der Aussparung 22ʺʺ relativ dünn ausgeführt werden sollen.

## Patentansprüche

1. Stator (10-10ʺʺ) für eine elektrische Radialfluss-Maschine in Innenläuferbauweise mit verteilter Wicklung, umfassend:
einen mehrere Zähne (21-21ʺʺ) aufweisenden Zahnstern (20-20" "), wobei zwischen den Zähnen (21-21ʺʺ) in Umfangsrichtung Statornuten vorgesehen sind und wobei die Zähne (21-21ʺʺ) mit Stegen (23a, 23a', 23a-1'; 23b, 23b', 23b-1') im zu einem Luftspalt zwischen Stator und Rotor weisenden Bereich verbunden sind, und
einen Jochring (30-30" "), wobei der Zahnstern (20-20" ") zumindest abschnittsweise innerhalb des Jochrings (30- 30ʺʺ) aufgenommen ist,
**dadurch gekennzeichnet, dass** die Zähne (21-21ʺʺ) des Zahnsterns (20-20ʺʺ) durch zumindest zwei Stege miteinander verbunden sind und eine Aussparung (22, 22', 22-1', 22"-22ʺʺ) zwischen den beiden Stegen (23a, 23a', 23a-1'; 23b, 23b-1') ausgebildet ist, wobei zumindest ein Steg (23b-23bʺʺ) zwischen einer Nut und der Aussparung sowie zumindest ein Steg (23a-23aʺʺ) zwischen der Aussparung (22, 22', 22-1', 22"-22"") und einer inneren Umfangsseite des Zahnsterns (20-20ʺʺ) ausgebildet ist.

2. Stator (10'-10ʺʺ) nach Anspruch 1,
**wobei**
der Zahnstern (20'-20ʺʺ) und/oder der Jochring (30'-30ʺʺ) in Umfangsrichtung mehrere Segmente aufweist.

3. Stator (10'-10ʺʺ) nach Anspruch 2,
**dadurch gekennzeichnet,**
**dass** der segmentiert ausgeführte Zahnstern (20'-20ʺʺ), der sich aus mehreren Segmenten (20a', 20a-1', 20a-2', 20a"-20aʺʺ) zusammensetzt, aus korn-orientiertem Elektroblech ausgeführt ist, wobei bevorzugt ist, dass die Vorzugsrichtung des kornorientierten Elektroblechs jeweils in Richtung einer Rotationsachse (R) des Stators zeigt.

4. Stator (10-10ʺʺ) nach Anspruch 1, 2 oder 3,
**dadurch gekennzeichnet,**
**dass** die Aussparung (22-22ʺʺ) kreisförmig ausgeführt oder durch eine oder mehrere Teilkreiskonturen begrenzt ist.

5. Stator (10-10ʺʺ) nach einem der vorangegangenen Ansprüche,
**dadurch gekennzeichnet,**
**dass** sich zylindrische, bevorzugt elektrisch nicht leitfähige oder eine verringerte elektrische Leitfähigkeit aufweisende, Elemente, wie Bolzen (6'), Stäbe und/oder Rohre (7‴) in der Aussparung (22, 22', 22-1', 22"-22ʺʺ) zwischen den Stegen (23a-23aʺʺ, 23b-23b" ") befinden, wobei bevorzugt ist,
**dass** die als axial durchgängige Rohre (7‴) ausgebildeten Elemente in der Aussparung (22, 22', 22-1', 22"-22ʺʺ) zwischen den Stegen (23a-23aʺʺ, 23b-23bʺʺ) zum Führen eines Kühlmediums ausgebildet sind.

6. Stator (10"-10ʺʺ) nach einem der voranstehenden Ansprüche,
**dadurch gekennzeichnet,**
**dass** der Zahnstern (20ʺ-20ʺʺ) derart ausgeführt ist, dass der Zahnstern zusätzlich zur Segmentierung um seinen Umfang durch eine Mehrzahl an Ringen in axialer Richtung segmentiert ist, wobei bevorzugt ist, dass die Zahnsternsegmente in axialer Richtung zueinander gestaffelt angeordnet sind.

7. Stator (10') nach Anspruch 5,
**dadurch gekennzeichnet,**
**dass** die als Bolzen (6') ausgebildeten Elemente mit einer axialen Länge größer als der eines Zahnsternsegmentes (20a') in bevorzugt regelmäßigen Abständen in einer Aussparung zwischen den Stegen (23a', 23b') befinden, wobei bevorzugt ist, dass in axialer Richtung aufeinander folgende Zahnsternsegmente wechselseitig mittels der Bolzen (6') ineinander verstiftet sind.

8. Stator (10'-10ʺʺ) nach einem der voranstehenden Ansprüche,
**dadurch gekennzeichnet,**
**dass** die Zahnsternsegmente (20-20ʺʺ) Verbindungsabschnitte (25a'-25ʺʺ, 25a-1'; 25b'-25ʺʺ, 25b-1') aufweisen, um sich miteinander und im Jochring mechanisch zu fixieren.

9. Stator nach einem der voranstehenden Ansprüche,
**dadurch gekennzeichnet,**
**dass** eine Nutisolation für eine Wicklung (5') in den Statornuten vorgesehen ist, wobei bevorzugt ist, dass die Nutisolation zweiteilig ausgeführt (9a', 9b') ist, wobei ferner bevorzugt ist, dass der Zahnstern (20'), insbesondere die Zahnsternsegmente (20a'), über eine stufenförmige Aussparung (27-1') verfügen.

10. Stator (10‴) nach einem der voranstehenden Ansprüche,
**dadurch gekennzeichnet,**
**dass** der Jochring derart segmentiert ausgeführt ist, dass Jochringsegmente über Verbindungsabschnitte für eine formschlüssige Verbindung verfügen.

11. Stator (10") nach einem der voranstehenden Ansprüche,
**dadurch gekennzeichnet,**
**dass** der Jochring (30ʺ) derart segmentiert ausgeführt ist, dass der Jochring (30ʺ) in axialer Richtung segmentiert ist, wobei die Jochringsegmente über Ösen (32ʺ) verfügen, um den Jochring sowie den Stator mittels Stäben (33ʺ) oder Rohren zu fixieren.

12. Stator nach Anspruch 10 oder 11,
**dadurch gekennzeichnet,**
**dass** die Jochringsegmente in axialer Richtung zueinander verschränkt angeordnet sind, wobei bevorzugt ist, dass Ösen oder Verbindungsabschnitte wechselseitig fluchten.

13. Stator gemäß einem der vorangegangenen Ansprüche,
**dadurch gekennzeichnet, dass**
in den Statornuten eine Wicklung in verteilter Anordnung aufgenommen ist.

14. Elektrische Radialfluss-Maschine in Innenläuferbauweise mit einem Stator gemäß einem der vorangegangen Ansprüche sowie einem Rotor.

15. Verfahren zur Montage eines Stators für eine elektrische Radialfluss-Maschine in Innenläuferbauweise mit verteilter Wicklung, insbesondere eines Stators gemäß einem der vorangegangenen Ansprüche, umfassend die Schritte:
Bereitstellen eines mehrere Zähne (21-21ʺʺ) aufweisenden Zahnsterns (20-20ʺʺ), wobei zwischen den Zähnen (21-21ʺʺ) in Umfangsrichtung Statornuten vorgesehen sind und wobei die Zähne (21-21ʺʺ) mit Stegen (23a, 23a', 23a-1'; 23b, 23b-1') im zu einem Luftspalt zwischen Stator und Rotor weisenden Bereich verbunden sind, wobei die Zähne (21-21ʺʺ) des Zahnsterns (20-20ʺʺ) durch zumindest zwei Stege miteinander verbunden sind und eine Aussparung (22, 22', 22-1', 22"-22ʺʺ) zwischen den beiden Stegen (23a, 23a', 23a-1'; 23b, 23b-1') ausgebildet ist, wobei zumindest ein Steg (23b-23bʺʺ) zwischen einer Nut und der Aussparung sowie zumindest ein Steg (23a-23aʺʺ) zwischen der Aussparung (22,22', 22-1',22"-22"") und
einer inneren Umfangsseite des Zahnsterns (20-20ʺʺ) ausgebildet ist, und Anbringen eines Jochrings (30-30ʺʺ) längs der Motor-Rotationsachse um den Zahnstern.

## Claims

1. Stator (10-10ʺʺ) for an electric radial flux machine in internal rotor configuration with distributed winding, comprising:
a toothed star (20-20"") having a plurality of teeth (21-21""), wherein stator grooves are provided between the teeth (21-21"") in the circumferential direction and wherein the teeth (21-21"") are connected to webs (23a, 23a', 23a-1'; 23b, 23b', 23b-1') in the region facing an air gap between stator and rotor, and
a yoke ring (30-30ʺʺ), wherein the toothed star (20-20ʺʺ) is at least partially received within the yoke ring (30-30""),
**characterised in that** the teeth (21-21"") of the toothed star (20-20"") are connected to each other by at least two webs, and a recess (22, 22', 22-1', 22"-22"") is formed between the two webs (23a, 23a', 23a-1'; 23b, 23b-1'), wherein at least one web (23b-23bʺʺ) is formed between a groove and the recess and at least one web (23a-23aʺʺ) is formed between the recess (22, 22', 22-1', 22"-22"") and an inner circumferential side of the toothed star (20-20ʺʺ).

2. Stator (10'-10ʺʺ) according to claim 1,
**wherein**
the toothed star (20'-20ʺʺ) and/or the yoke ring (30'-30"") has a plurality of segments in the circumferential direction.

3. Stator (10'-10ʺʺ) according to claim 2,
**characterised in that**
the segmented toothed star (20'-20""), which is composed of a plurality of segments (20a', 20a-1', 20a-2', 20a"-20a""), is made of grain-oriented electrical steel, wherein it is preferred that the preferred direction of the grain-oriented electrical steel points in the direction of a rotation axis (R) of the stator.

4. Stator (10-10ʺʺ) according to claim 1, 2 or 3,
**characterised in that**
the recess (22-22ʺʺ) is circular or is delimited by one or a plurality of partial circular contours.

5. Stator (10-10ʺʺ) according to any one of the preceding claims,
**characterised in**
**that** cylindrical elements, preferably electrically non-conductive or having reduced electrical conductivity, such as bolts (6'), rods and/or tubes (7"') are located in the recess (22, 22', 22-1', 22"-22"") between the webs (23a-23a"", 23b-23b""), wherein it is preferred
**that** the elements formed as axially continuous tubes (7"') in the recess (22, 22', 22-1', 22"-22"") between the webs (23a-23a"", 23b-23b"") are designed to guide a cooling medium.

6. Stator (10"-10") according to any one of the preceding claims,
**characterised in that**
the toothed star (20"-20ʺʺ) is designed in such manner that, in addition to being segmented around its circumference, the toothed star is also segmented in the axial direction by a plurality of rings, wherein it is preferred that the toothed star segments are arranged in a staggered manner in the axial direction.

7. Stator (10') according to claim 5,
**characterised in that**
the elements designed as bolts (6') with an axial length greater than that of a toothed star segment (20a') are located at preferably regular intervals in a recess between the webs (23a', 23b'), wherein it is preferred that successive toothed star segments in the axial direction are pinned into one another alternately by means of the bolts (6').

8. Stator (10'-10ʺʺ) according to any one of the preceding claims,
**characterised in that**
the toothed star segments (20-20"") have connecting sections (25a'-25"", 25a-1'; 25b'-25ʺʺ, 25b-1') to mechanically fix themselves to each other and in the yoke ring.

9. Stator according to any one of the preceding claims,
**characterised in that**
a groove insulation for a winding (5') is provided in the stator grooves, wherein it is preferred that the groove insulation is configured in two parts (9a', 9b), wherein it is further preferred that the toothed star (20'), in particular the toothed star segments (20a'), have a step-shaped recess (27-1').

10. Stator (10") according to any one of the preceding claims,
**characterised in that**
the yoke ring is segmented in such manner that yoke ring segments have connecting sections for a positive locking connection.

11. Stator (10") according to any one of the preceding claims,
**characterised in that**
the yoke ring (30") is segmented in such manner that the yoke ring (30") is segmented in the axial direction, wherein the yoke ring segments have eyelets (32") to fix the yoke ring and the stator by means of rods (33") or tubes.

12. Stator according to claim 10 or 11,
**characterised in that**
the yoke ring segments are arranged interlocked in the axial direction, wherein it is preferred that eyelets or connecting sections align alternately.

13. Stator according to any one of the preceding claims,
**characterised in that**
a winding is received in the stator grooves in a distributed arrangement.

14. Electric radial flux machine in internal rotor configuration with a stator according to any one of the preceding claims and a rotor.

15. Method for assembling a stator for an electric radial flux machine in internal rotor configuration with distributed winding, in particular a stator according to any one of the preceding claims, comprising the steps:
providing a toothed star (20-20ʺʺ) having a plurality of teeth (21-21""), wherein stator grooves are provided between the teeth (21-21"") in the circumferential direction, and wherein the teeth (21-21"") are connected to webs (23a, 23a', 23a-1'; 23b, 23b-1') in the region facing an air gap between the stator and rotor, wherein the teeth (21-21"") of the toothed star (20-20"") are connected to each other by at least two webs, and a recess (22, 22', 22-1', 22"-22"") is formed between the two webs (23a, 23a', 23a-1'; 23b, 23b-1'), wherein at least one web (23b-23b"") is formed between a groove and the recess, and at least one web (23a-23aʺʺ) is formed between the recess (22,22', 22-1', 22"-22"") and an inner circumferential side of the toothed star (20-20""), and
attaching a yoke ring (30-30ʺʺ) along the motor rotation axis around the toothed star.

## Revendications

1. Stator (10-10"") pour une machine électrique à flux radial de type à rotor interne avec un enroulement distribué, comprenant :
une denture en étoile (20-20"") présentant plusieurs dents (21-21""), dans lequel des rainures de stator sont prévues entre les dents (21-21"") dans la direction circonférentielle, et dans lequel les dents (21-21"") sont reliées à des parties de liaison (23a, 23a', 23a-1'; 23b, 23b', 23b-1') dans la région faisant face à un entrefer entre le stator et le rotor, et
une bague de jonction (30-30""), dans lequel la denture en étoile (20-20"") est logée au moins par sections à l'intérieur de la bague de jonction (30-30""),
**caractérisé en ce que** les dents (21-21"") de la denture en étoile (20-20"") sont reliées entre elles par au moins deux parties de liaison et un évidement (22, 22', 22-1', 22"-22"") est aménagé entre les deux parties de liaison (23a, 23a', 23a-1'; 23b, 23b-1'), dans lequel au moins une partie de liaison (23b-23b"") entre une rainure et l'évidement ainsi qu'au moins une partie de liaison (23a-23a"") entre l'évidement (22, 22', 22-1', 22""-22"") et un côté circonférentiel intérieur de la denture en étoile (20-20"") sont aménagées.

2. Stator (10'-10ʺʺ) selon la revendication 1,
**dans lequel**
la denture en étoile (20'-20"") et/ou la bague de jonction (30'-30"") présentent plusieurs segments dans la direction circonférentielle.

3. Stator (10'-10ʺʺ) selon la revendication 2,
**caractérisé en ce que**
la denture en étoile (20'-20"") réalisée de manière segmentée se compose de plusieurs segments (20a, 20a-1', 20a-2', 20a"-20a""), est réalisée à partir de tôle électrique à grain orienté, dans lequel il est préféré que la direction de prédilection de la tôle électrique à grain orienté soit en direction d'un axe de rotation (R) du stator.

4. Stator (10-10"") selon la revendication 1, la revendication 2 ou la revendication 3,
**caractérisé en ce que**
l'évidement (22-22"") est aménagé de manière circulaire ou est limité par un ou plusieurs contours de cercle partiel.

5. Stator (10-10"") selon l'une des revendications précédentes,
**caractérisé en ce que**
des éléments cylindriques, de manière préférée non-conducteurs électriquement ou présentant une conductivité électrique réduite, tels que des boulons (6'), des barres et/ou des tubes (7‴), se trouvent dans l'évidement (22, 22', 22-1', 22"-22"") entre les parties de liaison (23a-23a"", 23b-23b""), dans lequel il est préféré que
les éléments réalisés sous la forme de tubes (7‴) axialement traversants sont aménagés dans l'évidement (22, 22', 22-1', 22"-22"") entre les parties de liaison (23a-23a"", 23b-23b"") pour guider un agent de refroidissement.

6. Stator (10"-10ʺʺ) selon l'une des revendications précédentes,
**caractérisé en ce que**
la denture en étoile (20"-20"") est réalisée de telle manière que la denture en étoile est segmentée en plus de la segmentation autour de sa circonférence par une multitude d'anneaux dans la direction axiale, dans lequel il est préféré que les segments de denture en étoile soient agencés de manière échelonnée les uns par rapport aux autres dans la direction axiale.

7. Stator (10') selon la revendication 5,
**caractérisé en ce que**
les éléments réalisés sous la forme de boulons (6') avec une longueur axiale supérieure à celle d'un segment de denture en étoile (20a') se trouvent de manière préférée à intervalles réguliers dans un évidement situé entre les parties de liaison (23a', 23b'), dans lequel il est préféré que des segments de denture en étoile se suivant les uns les autres dans la direction axiale soient tour à tour boulonnés les uns dans les autres au moyen des boulons (6).

8. Stator (10'-10ʺʺ) selon l'une des revendications précédentes,
**caractérisé en ce que**
les segments de denture en étoile (20-20"") présentent des sections de liaison (25a'-25"", 25a-1'; 25b'-25"" 25b-1') pour se fixer mécaniquement les uns aux autres et dans la bague de jonction.

9. Stator selon l'une des revendications précédentes,
**caractérisé en ce que**
une isolation de rainure pour un enroulement (5') est prévue dans les rainures du stator, dans lequel il est préféré que l'isolation de rainure soit réalisée en deux parties (9a', 9b'), dans lequel il est en outre préféré que la denture en étoile (20'), en particulier les segments de denture en étoile (20a'), disposent d'un évidement étagé (27-1').

10. Stator (10‴) selon l'une des revendications précédentes,
**caractérisé en ce que**
la bague de jonction est réalisée de manière segmentée de telle sorte que des segments de bague de jonction disposent de sections de liaison pour une liaison par complémentarité de forme.

11. Stator (10") selon l'une des revendications précédentes,
**caractérisé en ce que**
la bague de jonction (30") est réalisée de manière segmentée de telle sorte que la bague de jonction (30") soit segmentée dans la direction axiale, dans lequel les segments de bague de jonction disposent d'œillets (32") pour fixer la bague de jonction ainsi que le stator au moyen de barres (33") ou de tubes.

12. Stator selon la revendication 10 ou la revendication 11,
**caractérisé en ce que**
les segments de bague de jonction sont agencés de manière restreinte les uns par rapport aux autres dans la direction axiale, dans lequel il est préféré que des œillets ou des sections de liaison soient alignés en alternance.

13. Procédé selon l'une des revendications précédentes,
**caractérisé en ce que**
un enroulement est logé dans les rainures de stator selon un agencement distribué.

14. Machine électrique à flux radial de type à rotor interne avec un stator selon l'une quelconque des revendications précédentes ainsi qu'avec un rotor.

15. Procédé de montage d'un stator pour une machine électrique à flux radial de type à rotor interne avec un enroulement distribué, en particulier d'un stator selon l'une quelconque des revendications précédentes, comprenant les étapes suivantes :
se mettre à disposition une denture en étoile (20-20"") présentant plusieurs dents (21-21ʺʺ), dans lequel des rainures de stator sont prévues entre les dents (21-21ʺʺ) dans la direction circonférentielle et dans lequel les dents (21-21ʺʺ) sont reliées à des parties de liaison (23a, 23a', 23a-1'; 23b, 23b-1') dans la région faisant face à un entrefer entre le stator et le rotor, dans lequel les dents (21-21"") de la denture en étoile (20-20"") sont reliées entre elles par au moins deux parties de liaison et un évidement (22, 22', 22-1', 22"-22"") est formé entre les deux parties de liaison (23a, 23a', 23a-1'; 23b, 23b-1'), dans lequel au moins une partie de liaison (23b-23b"") est aménagée entre une rainure et l'évidement ainsi qu'au moins une partie de liaison (23a-23a"") est réalisée entre l'évidement (22, 22', 22-1', 22"-22"") et un côté circonférentiel intérieur de la denture en étoile (20-20""), et
mettre en place d'une bague de jonction (30-30ʺʺ) le long de l'axe de rotation de moteur autour de la denture en étoile.
